# EUROPEAN PATENT APPLICATION

(11) **EP 0 728 633 A1**
(43) Date of publication of application: **28.08.1996**
(21) Application number: 96301205.9
(22) Date of filing: 22.02.1996
(51) Int. Cl.: B60R 21/26

(54) **Hybrid inflator with elongated housing and center discharge**

(30) Priority: 22.02.1995 US 394254; 17.04.1995 US 423261
(71) Applicant: MORTON INTERNATIONAL, INC., Chicago, Illinois 60606 (US)
(72) Inventor: Kort, Leland Brian, Lakewood, Colorado 80232 (US); Moore, Walter Arthur, Ogden, Utah 84401 (US); Clark, Randall Jensen, Pleasant View, Utah 84414 (US); Johnson, Kelly Budd, Layton, Utah 84040 (US); Pierotti, Leslie John, Huntsville, Utah 84317 (US); Hussey, Brett, Bountiful, Utah 84010 (US)
(74) Representative: Bankes, Stephen Charles Digby

(57) **Abstract**

A hybrid inflator (10) for an inflatable restraint system has a center frame (12) and two tubular end caps (14,16) forming an elongated housing (11) defining a chamber (28) storing pressurized inert gas. Units (18,20) for heating and delivering the stored gas are mounted in the center frame and positioned to deliver inflation gasses centrally with respect to the elongated housing. In a two unit embodiment, one unit (18) includes a squib (42) and a pyrotechnic gas generant (54), and the other unit (20) defines an outlet orifice (22) and baffle plate (60). In another two unit embodiment, the second unit includes an essentially non gas-producing heating composition which, when activated, heats and expands the pressurized gas. In a third embodiment, a unit includes heating material and ignition means and defines the outlet orifice. The centre frame (12) is extruded metal stock with two opposing flat surfaces adapted to mount one or more units.

## Description

This invention relates to hybrid inflators for vehicle occupant restraint systems and particularly to hybrid inflators having an elongated housing and central inflation gas delivery which adapts to the requirements of various installations.

Inflatable restraint systems utilizing an airbag and inflator are widely accepted in all types of vehicles. Vehicles have differing characteristics; for example, vehicles differ in the size and configuration of their dashboards or other mounting points for inflatable restraint systems, vehicles differ in the distance between the dash and an occupant of the vehicle, and vehicles differ in the width or height for which airbag protection is desired. Vehicles further differ in their structural response to crashes and in the sensor input provided to the inflators. These differences create variables in the restraint system, such as the shape and volume of the airbag and the desired speed of its deployment. Those variables in turn create different requirements of inflators supplying inflation gas to the bags. Some of these requirements have been addressed by hybrid inflators, which utilize a combination of stored compressed gas and a pyrotechnic gas generant material. The pyrotechnic gas generant provides some of the inflation gasses and also heats and expands the stored gas to enhance its contribution to inflating the bag.

The size of a hybrid inflator is in part determined by the volume of stored compressed gas, as well as the configuration and content of the pyrotechnic gas generant component. It further depends upon the volume of screen and filtering material required to trap particles and hot debris resultant from operation of a pyrotechnic gas generant system, as it is undesirable to introduce hot particles of burning gas generant and inflator debris into the expanding airbag. Further, passenger side hybrid inflators deliver gas from the end of an elongated housing, which detracts from even inflation of an airbag.

With due consideration for the aforementioned requirements of occupant restraint systems, it is desirable to decrease the size, weight and complexity of the inflators, and to provide for efficient delivery of inflation gas to airbags. It is further desirable to be able to adjust the performance parameters of inflators by building on established research, development and manufacturing capability.

### SUMMARY OF THE INVENTION

Accordingly, it is a principal object of the invention herein to provide a hybrid inflator for inflatable restraint systems.

It is also a principal object of the invention to provide a hybrid inflator which is simple to mount and promotes symmetric deployment of an airbag.

Another object of the invention herein is to provide a hybrid inflator which is readily adapted to the requirements of inflatable restraint systems in different vehicles.

An additional object of the invention herein is to provide a hybrid inflator which is readily adapted to use with airbags of varying volume.

A further object of the invention herein is to provide a hybrid inflator which utilizes common parts and manufacturing techniques in multiple embodiments.

In accomplishing these and other objects of the invention herein, there is provided a hybrid inflator comprising a center frame having a circumferential sidewall defining a longitudinal opening, the circumferential sidewall having first and second ends each perpendicular to the axis of the longitudinal center opening. A pair of formed end caps each has an open and a closed end, and the open ends of the end caps are respectively joined to the first and second ends of the center frame surrounding the longitudinal opening therein. One end cap may be integral with the center frame. Thus, the center frame and formed end caps together comprise an elongated housing defining a chamber for storing a pressurized inert gas of the hybrid inflator.

According to one aspect of the invention herein, the formed end caps have tubular sidewalls the length of which is selected to provide the desired volume of stored inert gas. According to another aspect of the invention, one end cap is a one piece construction with the center frame.

The center frame mounts at least one unit including heat generation means of the hybrid inflator and outlet means for delivering the inflation gasses. More particularly, the at least one unit is mounted through the circumferential sidewall of the center frame, the unit including ignitor means, and ignitable heat producing materials, and defining an outlet orifice for delivering inflation gas.

According to one aspect of the invention, the at least one unit includes an ignitor unit having a pyrotechnic gas generant therein, and the center frame further mounts a baffle cup unit defining an outlet plenum and outlet orifice covered by a rupturable seal. The ignitor unit expels gas generant gasses against the bottom of the baffle cup unit defining the outlet plenum, and the plenum inlet openings are on the periphery of the baffle cup unit, away from the stream of generant gasses. This provides mixing of the hot products of combustion of the gas generant with the inert gas, and a relatively clean flow of the combined inflation gasses.

According to other aspects of the invention, the central frame mounts an ignitor unit and also mounts a heating unit containing an essentially non gas-producing heating composition and defining an outlet orifice from the inflator covered by a rupturable seal. This ignitor unit activates the heating composition, which includes flow passages leading to the outlet orifice. The inert gasses are heated and expanded as they flow through the activated heating composition. Suitable essentially non gas-producing heating composition include thermite.

According to additional aspects of the invention, an ignitor unit also contains an essentially non gas-producing heating composition having flow passages to an exit opening. These further aspects of the invention also include means establishing early flow through the heating composition, by mechanically or explosively rupturing seals.

According to further aspects of the invention, the center frame is fabricated by extrusion and by cutting a frame of desired length from extruded stock. The circumferential sidewall of the extruded frame includes at least one flat exterior surface for mounting a unit therethrough, and preferably includes two opposed flat exterior surfaces for mounting two units therethrough.

The various features of novelty which characterize the invention are pointed out with particularity in the claims annexed to and forming part of this specification. For a fuller understanding of the invention, its operating advantages and specific objects attained by its use, reference is made to the accompanying drawings and descriptive matter in which the preferred embodiments are illustrated.

### BRIEF DESCRIPTION OF THE DRAWINGS

FIG. **1** is a longitudinal sectional view of a hybrid inflator according to the invention herein;
FIG. **2** is a cross-sectional view of the hybrid inflator of FIG. **1,** taken along the lines 2-2 of FIG. **1;**
FIG. **3** is a top fragmentary view of the hybrid inflator of FIG. **1;**
FIG. **4** is a bottom fragmentary view of the hybrid inflator of FIG. **1;**
FIG. **5** is a cross-sectional view of the hybrid inflator of FIG. **1,** similar to FIG. **2,** with the inflator in operation;
FIG. **6** is a cross-sectional view of another hybrid inflator according to the invention herein;
FIG. **7** is a cross-sectional view of the hybrid inflator of FIG. **6,** taken in the direction opposite from the view of FIG. **6,** with the inflator in operation;
FIG. **8** is a cross-sectional view of another hybrid inflator according to the invention herein;
FIG. **9** is a cross-sectional view of the hybrid inflator of FIG. **8,** taken in the direction opposite from the view of FIG. **8,** with the inflator in operation;
FIG. **10** is a cross-sectional view of another hybrid inflator according to the invention herein; and
FIG. **11** is a longitudinal sectional view of the hybrid inflator of FIG. **10,** with the inflator in operation.

The same reference numerals refer to the same elements throughout the various figures.

### DESCRIPTION OF PREFERRED EMBODIMENTS

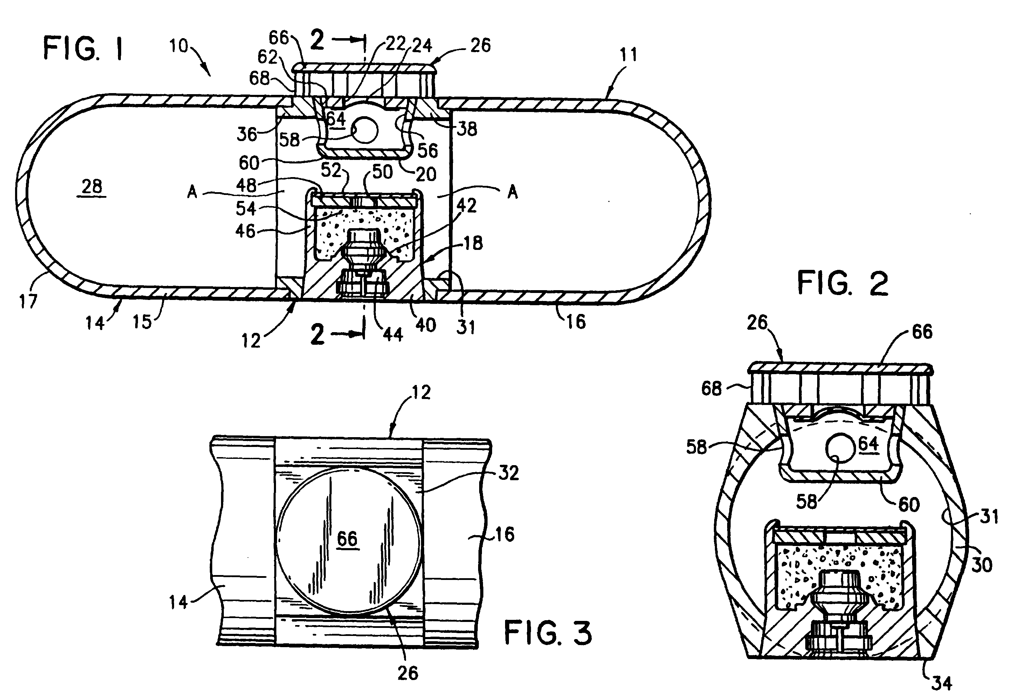

With references to FIGS. **1-5,** a hybrid inflator **10** according to the invention herein has an elongated housing **11** generally comprising a center frame **12** having end caps **14** and **16** secured thereto. An ignitor unit **18** is mounted in an opening in the center frame **12,** and a baffle cup unit **20** is mounted in another, opposed opening in the center frame **12**. The baffle cup unit **20** defines an outlet orifice **22** which is covered by a rupturable seal **24,** and a diffuser **26** is mounted to the center frame **12** above the outlet orifice. A chamber **28** is defined within the elongated housing **11** by the center frame **12** and the end caps **14** and **16,** and chamber **28** is filled with an inert gas, such as Nitrogen or Argon, under pressure. The pressures are typically in the range of 2,000 to 4,000 psi, as is known for hybrid inflators.

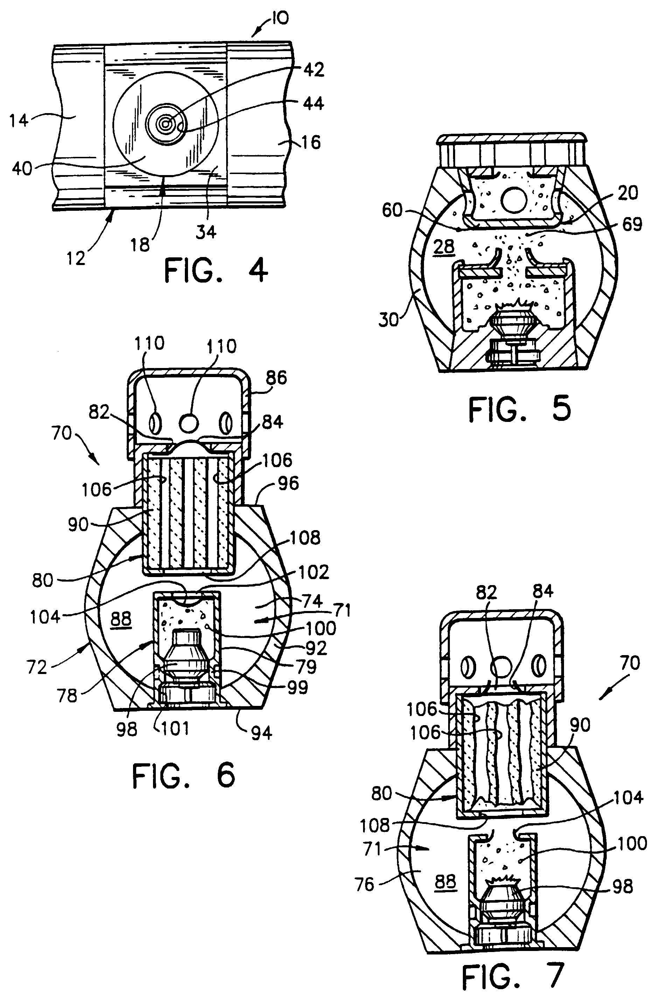

The center frame **12** has a linearly uniform cross-section about a longitudinal axis A-A, with the cross-section best seen in FIGS. **2** and **5**. The center frame is preferably formed by stamping extrusion or a combination of these with milled finishing. Thus, a plurality of center frames of desired length can be cut from prepared stock, with a minimum of fabrication and finishing for each individual frame.

The center frame **12** has a circumferential sidewall **30** surrounding a longitudinal center opening **31**. The exterior of sidewall **30** defines flat top and bottom surfaces **32** and **34,** respectively. The ends **36, 38** of the center frame **12** are machined to define integral annular flanges, but may be provided as flat surfaces as well. The ends **36, 38** are perpendicular to the longitudinal axis A-A and opening **31**.

End cap **14** includes a tubular sidewall **15** integral with a hemispherical end wall **17**. The open end of the tubular sidewall **15** is fitted over the annular flange of frame end **36** and is welded thereto. Alternatively, if the end of the center frame is provided as a flat surface, the open end of the tubular sidewall **15** is welded directly thereto. The end cap **16** is identical to the end cap **14,** and is fitted on the annular flange of frame end **38** and secured thereto by welding. It will be appreciated that the volume for stored gas is readily varied by changing the length of end caps **14** and **16,** without requiring any change in the center frame **12,** and that the length of the frame can also be changed for that purpose.

The unit **18** including ignition means is mounted through the sidewall **30** of the center frame **12,** and more particularly through the flat bottom surface **34** thereof, as best seen in FIGS. **1** and **4**. The ignitor unit **18** includes a base **40** which mounts an ignition squib **42**. The base **40** also defines a socket opening **44** for receiving a plug with electrical leads for operating the squib **42**. The ignitor unit **18** further comprises a cylindrical sidewall **46** and a top wall **48**, the top wall defining an exit opening **50** covered by a rupturable seal **52**. The unit **18** thereby defines a chamber containing a pyrotechnic gas generant material **54** which in this embodiment is boron potassium nitrate (BKNO₃). Other known pyrotechnics may also be used, as desired, including solid propellants such as polyvinyl chloride with potassium perchlorate.

The baffle cup unit **20** is also mounted through the circumferential sidewall **30** of the center frame **12,** and more particularly is mounted through the flat top surface **32** opposite the ignitor unit **18**. The baffle cup unit **20** has a generally cylindrical sidewall **56** in which a plurality of openings **58** are evenly spaced about the circumference. The baffle cup unit further comprises a baffle plate **60** supported by the cylindrical sidewall **56** above the exit opening **50** of the ignitor and gas generant unit **18**. The baffle cup unit also includes a top member **62,** which defines the outlet orifice **22** and supports the rupturable seal **24** covering it. The interior of the baffle cup unit comprises an outlet plenum chamber **64**.

Also mounted to the center frame **12** is the diffuser **26** and, as best seen in FIGS. **2, 3** and **5,** the diffuser is also mounted to the flat top surface **32** of the center frame. The diffuser comprises a top panel **66** supported above the outlet orifice **22** by spacer legs **68**. The legs **68** are secured to the frame **12** by welding. A screen filter, not shown, may be deployed in the diffuser.

It will be appreciated by those skilled in the art that the hybrid inflator **10** is used by mounting it in a reaction can having an airbag associated therewith, such that inflation gasses exiting the outlet orifice **22** and diffuser **26** are directed to the interior of the airbag. It will also be appreciated by those skilled in the art that one may mount the hybrid inflator **10** in any desired way for introducing inflation gasses into an airbag, consistent with the invention herein; however, it is a distinct advantage of the invention herein that the inflation gasses from an elongated hybrid inflator are provided from the central portion of the elongated housing, rather than from an end thereof. Thus, when the hybrid inflator is mounted in a reaction can having an airbag secured thereto, the inflation gasses may be easily directed into the central portion of the airbag inlet, to promote symmetrical inflation.

The hybrid inflator **10** operates in the following manner. An electrical impulse, derived from a crash sensor in response to a vehicle crash, is supplied to the squib **42,** which operates to ignite the pyrotechnic gas generant **54**. The resultant internal pressure in the ignitor unit **18** ruptures the seal **52** over exit opening **50** to release hot gasses into the gas storage chamber **28**. As best seen in FIG. **5,** the stream of hot gasses passing through exit opening **50** may include some products of combustion or other debris, generally indicated by the numeral **69**. These products of combustion and debris are directed against the baffle plate **60** of the baffle cup unit **20** which accumulates some of them and "knocks down" others to remove them from the stream of inflation gas. The burning gas generant creates additional pressure within the chamber **28,** in part by producing gaseous products of combustion and in part by heating the inert gas stored therein. The increased pressure ruptures the seal **24** to deliver a flow of inflation gasses through the outlet orifice **22,** and thereby inflate an airbag.

With reference to FIGS. **6** and **7,** another inflator **70** according to the invention herein is illustrated. It generally comprises an elongated housing **71** having a center frame **72** and tubular end caps **74** and **76**. The two sectional views of FIGS. **6** and **7** are taken in opposite directions, so that end cap **74** is seen in FIG. **6** and end cap **76** is seen in FIG. **7**. The inflator **70** further generally comprises an ignitor unit **78** and a booster cup unit **80** defining an outlet orifice **82** covered by a seal **84**. A diffuser **86** is mounted above the outlet orifice **84**. The elongated housing **71** defines a chamber **88** for storing an inert gas, such as Nitrogen or Argon, under pressure. The inflator **70** is characterized by the booster cup unit **80** containing an essentially non gas-producing heating composition through which the stored inert gas flows, as more fully described below. The heating composition in the embodiment disclosed herein is a bound mixture of aluminum powder and powdered iron oxide, known as thermite. A burn enhancer such as potassium perchlorate may be provided.

The center frame **72** is cut from the same extruded stock as the center frame **12** described above; however, the center frame **72** may be axially shorter in view of the smaller diameter of ignitor unit **78** and booster cup unit **80,** as compared to unit **18** and baffle cup unit **20** described above. The end caps **74** and **76** are tubular with integral hemispherical ends, and are attached to the center frame **72** in a manner similar to that described above with respect to center frame **12** and end caps **14** and **16**.

The center frame **72** has a circumferential wall **92** with a flat bottom surface **94** and flat top surface **96**. The ignitor unit **78** is generally cylindrical and is mounted in the center frame through the circumferential wall and flat bottom surface **94**. The ignitor unit **78** includes a squib **98** and ignitor material **100,** which in this embodiment is boron potassium nitrate (BKNO₃). The wall **79** of unit **78** is crimped at **99** to retain the squib, and the wall **79** forms a socket **101** for receiving a plug connector to the squib terminals. The ignitor unit **78** defines an exit opening **102** covered by a rupturable seal **104**. The amount of pyrotechnic material **100** is substantially less than that of the inflator **10** described above, for the purpose set forth hereinafter.

The booster cup unit **80** is mounted through the flat top surface **96** and circumferential wall **92** of the center frame **72**. The booster cup unit contains heating composition **90** having a plurality of longitudinal openings **106** formed therethrough. Alternatively, the heating composition can be provided in porous or pelletized form to provide passages, or as a solid with passage space about its exterior. All of these configurations are considered as having openings therethrough. The heating composition, upon heat activation, reacts at very high temperatures, in excess of 2000°C. The oxide/metal reaction provides its own oxygen supply, and produces heat but little or no gaseous products of combustion.

The booster cup unit defines an entrance opening **108** at the interior end thereof, such that the longitudinal openings **106** in the heating composition provide communication from the bottom opening **108** to the outlet orifice **82**. The diffuser 86 is secured over the booster cup unit **80,** and includes a plurality of spaced apart openings **110** for dispersing inflation gasses. Although not shown, a screen filter may be positioned within the diffuser **86**.

The inflator **70** is typically mounted in a reaction can in association with an airbag, such that the inflation gasses are directed to inflating the airbag. With reference to FIG. **7,** upon sensing of a vehicle crash, an electrical signal is provided to the squib **98,** which operates to ignite the gas generant material **100**. This causes the seal **104** to rupture, and an expulsion of hot products of combustion impinges upon the heating composition **90** through the opening **108** in the booster cup **80,** thereby igniting it. The pyrotechnic and heat generating reactions also increase the pressure in the gas storage chamber **88,** rupturing the seal **84** over outlet orifice **82**.

Gasses exiting the inflator **70** through outlet orifice **82** pass through the passages **106** in the heating composition **90**. Because the heating composition reacts at a very high temperature, the gas flowing through the heating composition is heated and expanded, with the expansion of the gas contributing to inflation of the airbag. The heating composition provides sufficient heating and expanding of the gasses, such that the amount of pyrotechnic gas generant is substantially reduced and is used primarily to initiate the reaction of the heating composition.

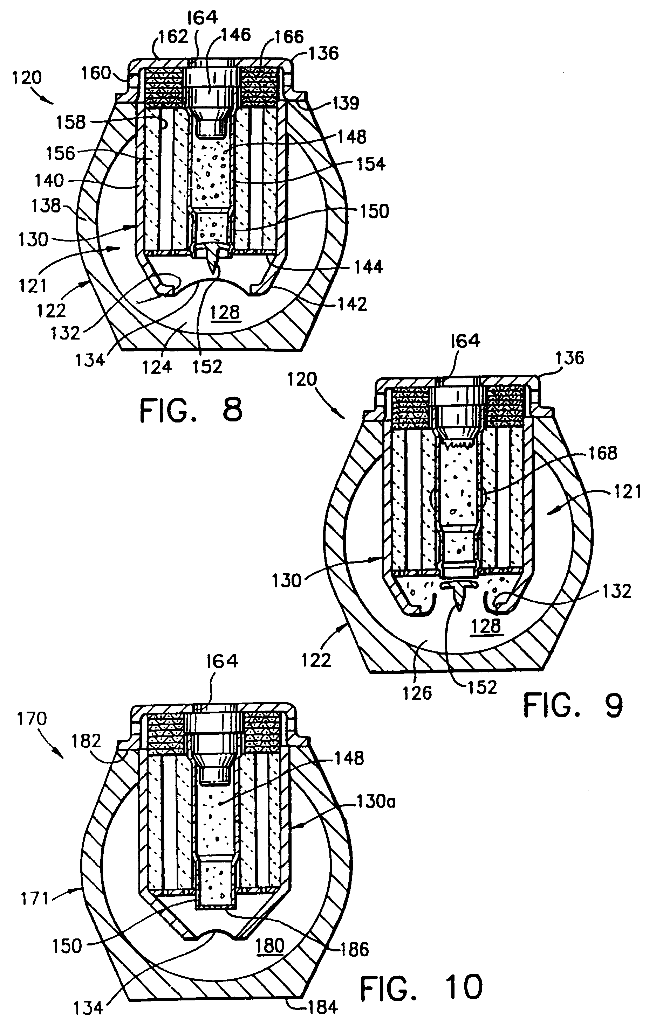

FIGS. **8** and **9** illustrate another inflator **120** according to the invention herein. The inflator **120** has an elongated housing **121** generally comprised of a center frame **122** fitted with end caps **124** and **126,** respectively, shown in the opposite direction views of FIG. **8** and FIG. **9,** to form a gas storage chamber **128**. A combined ignitor and booster unit **130** is mounted in the center frame **122** and the unit defines an outlet orifice **132** covered by a burst disk **134**. The unit **130** also mounts a diffuser **136** for delivering the flow of inflation gasses to an airbag.

The center frame **122** is taken from the same extruded stock as the center frames **12** and **72** described above, and is cut to the desired axial length to accommodate the unit **130**. The end caps **124, 126** and their attachment to the center frame **132** are also as described above in the other embodiments. The center frame **122** has a circumferential wall **138** and a flat top surface **139,** through which the unit **130** is mounted extending into the gas storage chamber **128**.

The ignitor and heating unit **130** includes a tubular sidewall **140** which tapers inwardly at its lower end **142** to define the outlet orifice **132**. The rupturable burst disk **134** deployed across the outlet orifice **132** retains an inert gas such as Argon or Nitrogen within the pressure chamber **128** at a typical pressure of 2,000-4,000 psi.

An annular perforated panel **144** extends across the sidewall **140** at the transition to its lower end **142,** and supports an ignition tube **150** centrally within the generant cup **140**. The ignition tube is shaped at its upper portion to receive a squib **146,** and below the squib **146,** the ignition tube contains a pyrotechnic **148,** which is boron potassium nitrate (BKNO₃). At the lower end of the ignition tube **150,** a projectile **152** is releasably engaged in the ignition tube and aimed toward the burst disk **134**. The ignition tube also defines radially disposed openings **154** from the pyrotechnic **148**.

The annular space between the generant cup **140** and the ignition tube **150** receives an essentially non gas-producing heating composition which, in the preferred embodiment, is thermite **156** as described above. The heating composition is provided in a tubular configuration surrounding the ignition tube **150,** and has a series of longitudinal openings **158,** so that gas may flow from the outlet orifice **132** through the heating composition to the diffuser **136**. Also as noted above, the openings can be provided as interstices of porous material, about the exterior of a mass of bound heating composition, or the heating composition can be provided in pellet form.

The diffuser **136** is mounted to the center frame **122** above the unit **130**. The diffuser **136** is generally cup-shaped and defines openings **160** in its sidewall for delivering inflation gasses. The top wall **162** of the diffuser defines opening **164** for receiving a plug connector to terminals of the squib **146**. Filter screen **166** is contained within the diffuser, to remove debris from the inflation gasses.

The inflator **120** is typically mounted in a reaction can having an airbag mounted thereto, such that inflation gasses from the diffuser are delivered to the interior of the airbag. The inflator **120** operates upon receipt of an electrical impulse from a crash sensor, which fires the squib **146**. The squib ignites the pyrotechnic **148** and its rapidly expanding products of combustion drive the projectile **152** downwardly to burst the diaphragm **134**. The pyrotechnic gas blows through the radial openings **154** in the ignition tube and ignites the heating composition **158,** as indicated at **168**. The heating composition is also ignited in other areas, and particularly along the openings **158,** by the products of combustion exiting the lower end of ignition tube **150**. Although the pyrotechnic produces some hot gasses, its primary function is to initiate the reaction of the heating composition.

Upon rupture of the burst disk **134,** the pressurized gas in storage chamber **128** flows through the outlet orifice **132** and heating composition **156,** and exits the inflator through the diffuser openings **160**. Because the projectile ruptures the burst disk prior to substantial heat build-up in the unit **130,** the early flow of gas is somewhat "soft" and serves to initially deploy the airbag prior to the onset of rapid, heat-boosted inflation. The boosted inflation occurs when the heating composition is fully ignited, and the gas flowing therethrough is substantially heated and expanded.

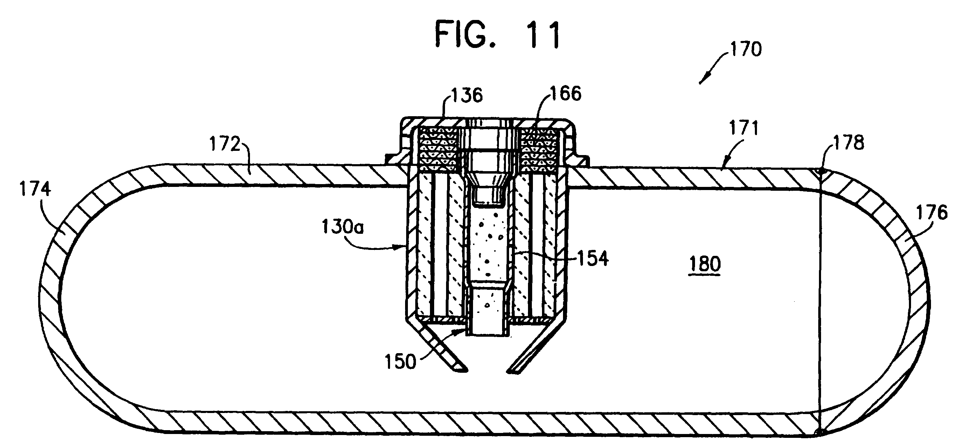

With reference to FIGS. **10** and **11,** another inflator **170** according to the invention herein is illustrated. It is characterized by an elongated housing **171** including a deep drawn center frame **172** having an integral end cap **174** and a second end wall provided by end cap **176** secured to the open end of the center frame **172** by weld **178,** thereby defining a chamber **180** for storing pressurized inert gas. The center frame is preferably deep drawn with flat upper and lower surfaces **182** and **184,** thereby adapting the housing to receive units, such as the ignitor and baffle cup units **18** and **20,** ignitor unit **78** and booster cup unit **80,** or the combined ignitor and booster unit **130**. However, a housing without flat surfaces also suffices.

Inflator **170** employs a combined ignitor and booster unit **130a** which is highly similar to unit **130** but is characterized by a rupturable seal **186** positioned over the end of the ignition tube **150** in place of the projectile **152** of inflator **120**. Thus, the burst disk **134** is ruptured by heat and pressure generated upon ignition of the pyrotechnic **148** rather than mechanically by the projectile. FIG. **11** shows the inflator **170** after the squib has ignited the pyrotechnic **148,** rupturing seal **186** and burst disc **134** and activating the heating composition through openings **154** in tube **150**.

Each of the above inflators utilizes a center frame taken from common stock, and accepting end caps and units to achieve a complete, operable hybrid inflator. The desired performance characteristics of a hybrid inflator of this type are easily adjusted through selection of the volume of stored gas, by varying the length of the end caps or center frame, and selection of the unit providing the desired boost. The cross-sectional configuration of the center frame may be modified from that described above while still enjoying the benefits of the invention, as can the structural detail of the units.

Each of the inflators is also characterized by an elongated housing adapted to provide the inflation gasses from the central portion thereof, which those skilled in the art can utilize in achieving more efficient reaction cans and introduction of inflation gas to an airbag to promote symmetric inflation.

## Claims

1. A hybrid inflator (10) for an inflatable restraint system, comprising:
A) an elongated housing (11) having a center frame (12) having a circumferential sidewall (30) defining a longitudinal opening (31) and first and second end caps (14, 16) the center frame and end caps together defining a chamber (28) storing a pressurized inert gas;
B) at least one unit or units (18, 20) mounted through the circumferential sidewall of the center frame generally centrally in the elongated housing, at least one said unit (18) containing a heat producing material and configured and adapted to expose the heat producing material and products of combustion thereof directly to the stored gas after ignition of the heat producing material, means for igniting the heat producing material, and at least one said unit (20) defining a rupturably-sealed outlet orifice (22) through which inflation gas is delivered from the chamber upon operation of the hybrid inflator.

2. A hybrid inflator as defined in Claim 1 wherein the centre frame (12) has a first and a second end (36, 38), the first and second end caps (14, 16) are tubular and each end cap has an open and a closed end, and the open ends of the tubular end caps are respectively secured to the first and second ends of the center frame to define the chamber storing a pressurized gas.

3. A hybrid inflator as defined in claim 2 wherein the first and second tubular end caps (14, 16) have hemispheric closed ends (17).

4. A hybrid inflator as defined in any preceding claim wherein the center frame (12) is extruded metal having a linearly uniform cross-sectional configuration.

5. A hybrid inflator as defined in any preceding claim wherein the circumferential sidewall (30) has at least one flat exterior surface (32, 34) and the at least one unit (18, 20) is mounted through the flat exterior surface and circumferential sidewall.

6. A hybrid inflator as defined in claim 5 wherein the circumferential sidewall (30) has two generally parallel flat exterior surfaces (32, 34), one said unit (18, 24) being mounted through each flat exterior surface of the circumferential sidewall.

7. A hybrid inflator as defined in claim 1 wherein the center frame (172) and one end cap (174) are a one piece construction.

8. A hybrid inflator as defined in claim 7 wherein the one piece centre frame (172) and end cap (174) are fabricated by deep drawn metal forming.

9. A hybrid inflator as defined in any preceding claim wherein said units comprise:
1) a first igniter unit (18) including a squib (42) and pyrotechnic gas generant (54), and
2) a second baffle cup unit (20) defining an outlet orifice (22) from the gas storing chamber covered by a rupturable seal (24) and a solid baffle plate (60) interposed between the outlet orifice and the ignitor unit.

10. A hybrid inflator as defined in claim 9 wherein the ignitor unit (18) defines an exit opening (50) for releasing products of combustion of the gas generant material, and the solid plate (60) is interposed between the exit opening and outlet orifice (22).

11. A hybrid inflator (70) as defined in any preceding claim wherein the said units comprise:
1) a booster cup unit (80) defining an outlet orifice (82) from the gas storing chamber (88) covered by a rupturable seal (84) and containing an essentially non gas-producing heating composition (90) positioned in a flow path of stored gas through the booster cup unit, and
2) an igniter unit (78) including a squib (98) and a pyrotechnic material, (100), the ignitor unit being configured to direct the pyrotechnic material, upon ignition thereof by the squib, toward the heating composition (90) for initiating a heat producing reaction thereof.

12. A hybrid inflator as defined in claim 11 wherein the heating composition (90) includes aluminium powder and powdered iron oxide.

13. A hybrid inflator as defined in claim 11 or claim 12 wherein the heat producing composition (90) defines a plurality of passages (106) through which stored gas passes in exiting the hybrid inflator.

14. A hybrid inflator (120, 170) as defined in any one of claims 1 to 8 which comprises a single said unit (130, 130a) and the heat producing material (156) is an essentially non gas-producing heating composition deployed in the flow path of inflation gas delivered through the outlet orifice (132).

15. A hybrid inflator as defined in claim 14 wherein the unit (130, 130a) has an upper end mounted to the circumferential sidewall (138) of the housing (121, 171), a lower end (142) within the housing and defining the rupturably sealed outlet orifice (132), whereby the stored gas flows through the outlet orifice prior to heating by the heating composition (156).

16. A hybrid inflator as defined in claim 14 or claim 15 wherein the means for initiating reaction of the heating composition (156) includes a squib (146) and pyrotechnic material (148), and wherein ignition of the pyrotechnic material is adapted to open the rupturably sealed outlet orifice (132).

17. A hybrid inflator as defined in claim 16 wherein the unit (130) further includes a projectile (152) adapted to be driven through the rupturably sealed outlet orifice (132) upon ignition of the pyrotechnic material (148).

18. A hybrid inflator for an inflatable restraint system, comprising:
A) an elongated housing (11) defining a chamber (28) for containing pressurized inert gas;
B) a first unit (18) containing ignitable material (54) for heating the pressurized gas, the unit containing the ignitable material being configured and adapted to expose the ignitable material and the products and heat of combustion thereof, when ignited, directly to the stored gas, the unit being mounted to the housing generally centrally along its elongated length and extending into the chamber containing pressurized inert gas;
(C) means (42) mounted to the housing for igniting the ignitable material; and
(D) an outlet orifice (22) for delivering heated inflation gas from the chamber, the outlet orifice being defined generally centrally along the elongated length of the housing and being rupturably sealed for containing pressurized gas in the chamber until operation of the first unit.

19. A hybrid inflator as defined in claim 18 wherein the housing (11) comprises a center frame (12) having a longitudinal opening (31) therethrough, and first and second end caps (14, 16) secured to the center frame, the center frame and end caps together defining the chamber (28) for containing pressurized gas, and the first unit (18) is mounted in the center frame.

20. A hybrid inflator as defined in claim 19 and further comprising a second unit (78) mounted to the center frame (72) and including the means for igniting the ignitable material.

21. A hybrid inflator as defined in claim 19 wherein the outlet orifice (22) is defined in a second unit (20) mounted in the center frame (12).

22. A hybrid inflator as defined in claim 18 wherein the outlet orifice (22) is defined in a second unit (20) mounted in a center frame (12) generally centrally along the length of the elongated housing (11).

23. A hybrid inflator as defined in claim 22 wherein the first unit (18) includes a squib (42) and pyrotechnic gas generant (54) and defines an exit opening (50) for releasing products of combustion of the gas generant material, and the second unit (20) includes a baffle plate (60) positioned between the exit opening and the outlet orifice (22).

24. A hybrid inflator as defined in claim 18 wherein the ignitable material (156) for heating the pressurized gas is an essentially non gas-producing heating composition and the first unit (130, 130a) also defines the outlet orifice (132) positioned to provide a flow path adjacent the heating composition for delivering heated gas from the chamber (128, 180).

25. A hybrid inflator as defined in claim 24 wherein the means for igniting the heating composition (156) includes a squib (146) and pyrotechnic gas generant (148) positioned within the first unit (130, 130a).

26. A hybrid inflator as defined in claim 25 wherein the outlet orifice (132) is defined between the heating composition (156) and the pressurized gas.

27. A hybrid inflator as defined in claim 24 wherein the means for igniting the heating composition (90) includes a squib (98) and a pyrotechnic gas generant (100) included in a second unit (78) mounted to the housing (72).

28. A hybrid inflator (10) comprising:
A) an extruded metal center frame (12) having a circumferential sidewall (30) with first and second ends (36, 38), the circumferential sidewall defining a central opening (31) between the first and second ends, the center frame having a cross-section which is linearly uniform along the central opening;
B) first and second end caps (14, 16), each end cap having a tubular sidewall and an open and a closed end, the open ends of the first and second end caps respectively secured to the first and second ends of the center frame to provide a closed chamber (28) storing a pressurized gas;
C) the circumferential sidewall of the center frame further defining at least one opening therethrough; and
D) at least one unit (18) including ignitable material (54) for heating the stored gas by contact with the ignitable material and the products of combustion thereof and exiting heat expanded gas from the closed chamber.
